# DEMANDE DE BREVET EUROPEEN

(11) **EP 4 834 670 A1**
(43) Date de publication de la demande: **04.11.2026**
(21) Numéro de dépôt: 26174898.2
(22) Date de dépôt: 27.04.2026
(51) Int. Cl.: B60R 21/231, B60R 21/2338

(54) **SIEGE A AIRBAG INTEGRE**

(30) Priorité: 02.05.2025 FR 2504685
(71) Demandeur: Renault s.a.s, 92100 Boulogne Billancourt (FR)
(72) Inventeur: RUFFET, Renaud, 78280 GUYANCOURT (FR)

(57) **Abrégé**

L'invention concerne un siège (1) de véhicule automobile, comportant :
- un dossier (20),
- une assise (10), et
- un dispositif de retenue d'un occupant (90) du siège qui comprend, d'une part, au moins un coussin gonflable de sécurité (40, 41) qui, lorsqu'il est gonflé, est adapté à se déployer sur le côté au moins de l'occupant, et, d'autre part, au moins une bride (50, 51) qui s'étend en longueur entre deux extrémités rattachées respectivement au dossier (20) et à l'assise (10).

Selon l'invention, la bride présente une largeur plus petite sur une première partie de sa longueur que sur une seconde partie de sa longueur.

## Description

### DOMAINE TECHNIQUE DE L'INVENTION

La présente invention concerne de manière générale la sécurité des passagers de véhicules automobiles.

Elle concerne plus particulièrement un siège pour véhicule automobile, comportant :
- un dossier,
- une assise, et
- un dispositif de retenue d'un occupant du siège qui comprend, d'une part, au moins un coussin gonflable de sécurité qui, lorsqu'il est gonflé, est adapté à se déployer sur le côté au moins de l'occupant, et, d'autre part, au moins une bride qui s'étend en longueur entre deux extrémités rattachées respectivement au dossier et à l'assise.

L'invention concerne également un véhicule automobile équipé d'un tel siège.

### ETAT DE LA TECHNIQUE

Actuellement, les airbags sont logés dans le volant du véhicule, dans le tableau de bord et au-dessus des fenêtres (on parle d'airbag rideau) afin de pouvoir se déployer autour du conducteur et du passager avant en cas de choc.

Les emplacements de ces airbags ne sont pas idéaux puisqu'ils occupent une place importante au sein de la planche de bord et du volant. Les airbags rideaux occupent également beaucoup de place, occasionnant des pertes de volume pour l'implantation des poignées de pavillon ou encore pour obtenir une largeur maximale de toit ouvrant.

En outre, dans le cadre de l'autonomisation des véhicules automobiles, il s'avère nécessaire de revoir cet agencement, pour tenir compte du fait que le conducteur ne se tiendra plus nécessairement face à la route, volant entre les mains, mais qu'il pourra adopter des attitudes différentes.

Dans cette perspective, une nouvelle catégorie d'airbags dits « cocons » ou SCRS (de l'anglais « Seat Centric Restraint System ») a commencé à être développée par la demanderesse.

Ainsi, on connaît notamment du document FR3131258 un siège équipé, dans chacun des deux flancs de son dossier, d'un coussin gonflable. Ces deux coussins sont prévus pour se gonfler en cas de choc de telle façon qu'ils se déploient de part et d'autre de l'occupant du siège puis devant lui.

Pour s'assurer que les deux coussins se gonflent dans la position souhaitée, ce document explique que deux brides (plus précisément des sangles) sont cousues sur chaque coussin. Chaque sangle présente une extrémité supérieure fixée au dossier et une extrémité inférieure fixée à l'ossature de l'assise, et plus précisément dans une zone centrale d'une traverse dite anti-sous-marinage.

En conditions normales (en l'absence d'accident), chaque sangle reste logée dans le siège, en passant pour cela le long d'un côté du dossier et de l'assise.

En pratique, si la sangle est alors principalement logée sur les bords de l'assise, son extrémité qui se rattache à la traverse anti-sous-marinage se prolonge dans une zone sur laquelle l'occupant du siège s'assiéra. Elle génère alors dans cette zone un renflement et donc un point dur dans l'assise, qui peut s'avérer gênant pour l'occupant.

Pour remédier à cela, la solution pouvant être employée serait de décaler sur le côté le point d'attache de la sangle sur l'assise. Mais cette solution s'avère contraignante.

### PRESENTATION DE L'INVENTION

Afin de remédier à l'inconvénient précité de l'état de la technique, la présente invention propose plutôt de travailler sur la géométrie de la bride.

Plus particulièrement, on propose selon l'invention un siège tel que défini dans l'introduction, dans lequel la bride présente une largeur plus petite sur une première partie de sa longueur que sur une seconde partie de sa longueur.

Préférentiellement, la bride comporte, sur la première partie de sa longueur, une corde, et, sur la seconde partie de sa longueur, une sangle reliée à la corde.

La partie de plus grande largeur (typiquement la sangle) est idéale pour que la bride puisse assurer sa fonction de mise en place du coussin gonflable de sécurité ou de retenue de l'occupant dans son siège. En effet, elle présente une surface importante qui permet de ne pas détériorer le coussin ou de ne pas blesser l'occupant.

La partie de plus petite largeur (typiquement la corde) est pour sa part moins encombrante. Elle peut ainsi par exemple être intégrée au sein même de l'assise, sans occasionner d'inconfort pour l'occupant. Elle peut notamment être disposée sous les jambes de l'occupant sans provoquer de gêne, tant en conditions normales d'utilisation (en l'absence d'accident) qu'en cas d'accident, où elle se déploie alors sous la mousse de l'assise sans causer de blessures aux jambes de l'occupant mais au contraire en ramenant les jambes de l'occupant l'une contre l'autre, dans une attitude à privilégier.

Le déploiement de la partie de plus petite largeur (typiquement la corde) se fait en outre plus facilement, en ce sens qu'une sangle risquerait de s'accrocher plus facilement aux composants du véhicule situés sur les côtés du siège, notamment aux leviers de commande manuel du siège (ceux qui permettent par exemple de régler l'inclinaison du dossier ou la hauteur de l'assise).

En outre, en cas d'accident, lorsque la bride est installée dans un fourreau et qu'elle doit en être extraite, la corde glissera et s'extraira mieux que la sangle hors de ce fourreau. Elle garantit en effet une réduction significative des frottements avec le fourreau. Par ailleurs, la corde sera plus facile à installer qu'une sangle dans le fourreau.

D'autres caractéristiques avantageuses et non limitatives du siège conforme à l'invention, prises individuellement ou selon toutes les combinaisons techniquement possibles, sont les suivantes :
- ladite bride est couplée au coussin gonflable de sécurité ;
- ladite bride présente une épaisseur plus grande sur la première partie de sa longueur que sur la seconde partie de sa longueur ;
- la sangle présente une extrémité repliée sur elle-même pour former une boucle au travers de laquelle passe la corde, et il est prévu des moyens de fixation de l'extrémité de la sangle en position repliée sur elle-même ;
- les moyens de fixation comportent une couture ;
- il est prévu des moyens de blocage de la corde dans la boucle, qui comportent de préférence une couture qui passe au travers de la sangle et de la corde ;
- la corde présente une extrémité repliée sur elle-même pour former une boucle au travers de laquelle passe la sangle, et il est prévu des moyens de fixation de l'extrémité de la corde en position repliée sur elle-même ;
- les moyens de fixation comportent une surliure ;
- il est prévu au moins une autre sangle qui est rattachée à ladite corde ou à la sangle par une extrémité et au dossier par une autre extrémité ;
- la bride se rattache à l'assise du côté de la première partie de sa longueur, et au dossier du côté de la seconde partie de sa longueur ;
- il est prévu un fourreau allongé qui fixé à l'assise et qui loge uniquement la première partie de la longueur de la bride.

L'invention propose également un véhicule automobile comportant un plancher et un siège tel que précité, monté sur le plancher.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un siège conforme à l'invention, sur laquelle les coussins gonflables de sécurité sont représentés en position déployée ;
[Fig. 2] est une vue schématique en perspective d'une traverse de l'ossature du siège de la figure 1 ;
[Fig. 3] est une vue schématique de face d'une zone de jonction entre une sangle et une corde d'une bride du siège de la figure 1 ;
[Fig. 4] est une vue schématique de côté de la zone de jonction de la figure 3.

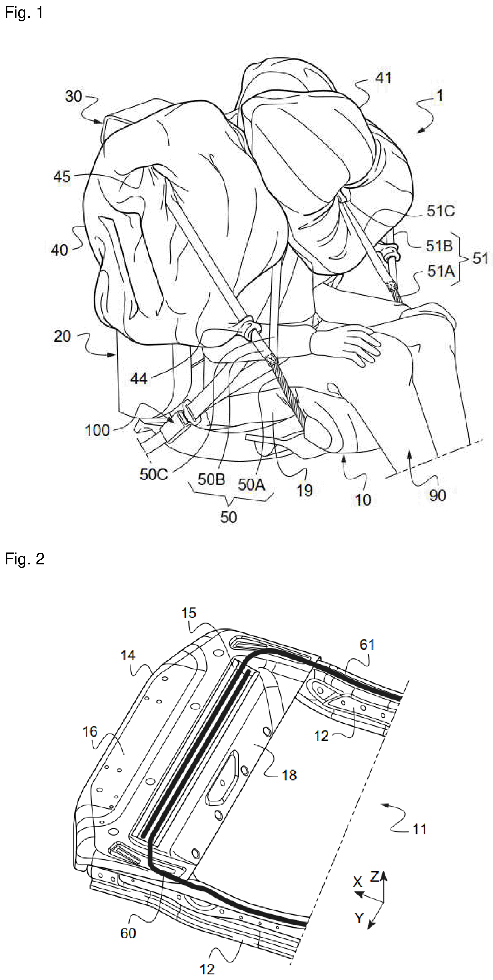

Sur la figure 1, on a représenté un siège 1 dans lequel est assis un occupant 90.

Ce siège 1 est ici installé dans l'habitacle d'une voiture. En variante, il pourrait être installé dans l'habitacle de tout autre type de véhicule automobile (camion, avion, wagon...).

Il s'agit ici du siège du conducteur de ce véhicule. Mais il pourrait aussi bien s'agir d'un autre des sièges du véhicule, notamment du siège passager (situé à côté du siège conducteur) ou même d'un siège situé à l'arrière du siège conducteur.

Dans la suite de la description, les termes « avant » et « arrière » seront utilisés par rapport au véhicule automobile, en considérant que le siège est monté dans le véhicule avec une configuration standard (face à la route). Ainsi, la partie avant d'un élément désignera la partie de cet élément qui est située du côté du capot du véhicule et la partie arrière désignera la partie de cet élément qui est située du côté opposé.

Les termes « inférieur » (ou « bas ») et « supérieu » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

On a représenté sur la figure 2 un repère orthonormé dans lequel l'axe X est longitudinal et orienté vers l'avant, l'axe Y est transversal et orienté vers la gauche du véhicule, et l'axe Z est vertical et orienté vers le haut.

Comme le montre la figure 1, le siège 1 comporte classiquement une assise 10 et un dossier 20 équipé d'un appui-tête 30. Le dossier et l'assise comprennent chacun une ossature, une garniture (ou mousse) rapportée sur l'ossature, et une housse couvrant la garniture. L'assise est classiquement majoritairement placée à l'avant et sous le dossier. Le siège 1 présente alors deux côtés latéraux respectivement tournés vers les deux ailes avant du véhicule.

La garniture du dossier et/ou de l'assise présente une partie centrale sensiblement plane, sur laquelle l'occupant peut principalement s'appuyer, et deux rebords latéraux qui sont situés de part et d'autre de la partie centrale et qui permettent de retenir l'occupant dans son siège lorsque le véhicule tourne.

L'ossature du dossier et/ou de l'assise est par exemple formée de pièces métalliques fixées ensemble.

Ici, on s'intéressera davantage à l'ossature 11 de l'assise 10. Comme le montre la figure 2, cette ossature 11 comporte dans cet exemple deux flancs latéraux 12 métalliques, connectés rigidement ensemble par des éléments de liaison métalliques. Les deux flancs latéraux 12 s'étendent dans des plans verticaux parallèles. Une nappe (non représentée) de retenue de la garniture, par exemple formée de fils métalliques entrecroisés, s'étend entre les deux flancs latéraux 12.

Parmi les éléments de liaison métalliques, il est prévu à l'arrière de l'ossature une barre transversale non visible. Il est par ailleurs prévu à l'avant une traverse dite anti-sous-marinage 14.

On rappellera ici que le sous-marinage correspond au phénomène de glissement du bassin d'un occupant sous la ceinture de sécurité lors d'un choc frontal, ce qui peut lui occasionner des blessures graves, notamment abdominales.

La traverse anti-sous-marinage 14 est donc une structure intégrée à l'assise 10, qui a pour fonction de limiter le phénomène de sous-marinage.

Cette traverse anti-sous-marinage 14 pourrait se présenter sous des formes différentes. Il s'agit ici d'une plaque métallique emboutie et fixée aux flancs latéraux 12, par exemple par rivetage, soudage ou vissage.

En pratique, cette traverse anti-sous-marinage 14 est formée par une fine paroi ici métallique, qui s'étend en longueur entre les deux flancs latéraux 12. Dans l'exemple illustré sur la figure 2, ses extrémités sont conformées pour venir chevaucher les flancs latéraux 12 afin de faciliter l'assemblage de l'ossature 11 de l'assise 10 et d'optimiser la rigidité de cette ossature. Entre ses deux extrémités (dans la zone sur laquelle les jambes de l'occupant 90 viendront reposer), la traverse anti-sous-marinage 14 comporte une paroi supérieure 16 sensiblement plane, bordée à l'avant et à l'arrière par des rebords avant et arrière 18, inclinés vers le bas par rapport à cette paroi supérieure 16.

La paroi supérieure 16 et/ou le rebord arrière 18 sont inclinés vers l'arrière pour s'opposer au phénomène de sous-marinage.

Bien entendu, en variante, cette ossature 11, et notamment cette traverse anti-sous-marinage 14, pourrait se présenter autrement, par exemple sous la forme d'une coque en matière plastique fibrée.

La garniture est rapportée entre les flancs latéraux 12. Des flasques en matière plastique peuvent être rapportés sur les faces extérieures des flancs latéraux 12, afin de les masquer. L'ossature du dossier 20 présente une architecture similaire, avec deux flancs latéraux métalliques, connectés rigidement ensemble par des éléments de liaison métalliques.

Le siège 1 présente différentes mobilités.

Ici, l'assise 10 est prévue pour être montée mobile en hauteur sur le plancher du véhicule et mobile d'avant en arrière sur le plancher.

Le siège 1 comporte par exemple à cet effet deux glissières et un système de rehausse standards. Le système de réhausse est ici motorisé, mais il pourrait en variante être à commande manuelle.

En outre, le dossier 20 est monté sur l'ossature 11 de l'assise 10 avec une mobilité de basculement autour d'un axe transversal (l'axe Y), sur une course supérieure à 10 degrés. Le système de basculement est ici motorisé, mais il pourrait en variante être à commande manuelle (avec des moyens de blocage et de réglage mécanique de cette mobilité).

Le siège 1 est par ailleurs équipé d'un système de ceinture de sécurité 100 (Figure 1). Ce système de ceinture de sécurité pourrait être du type à deux points (avec une sangle ventrale qui s'attache de part et d'autre du bassin de l'occupant du siège) ou à trois points (avec une sangle dont une extrémité est fixée d'un premier côté du siège, au niveau de l'assise, dont l'autre s'enroule dans un enrouleur fixé au châssis du véhicule ou au dossier, de ce même premier côté, et qui s'attache par une boucle de l'autre côté du siège), voire à quatre points.

Le siège 1 est équipé d'un dispositif de retenue de l'occupant en cas de choc, c'est-à-dire d'un dispositif permettant de retenir le conducteur et d'amortir le choc qu'il ressent lorsque la voiture percute ou est percutée par un obstacle. Ici, ce dispositif de retenue est conçu pour assurer cette fonction quel que soit le type de choc (frontal, latéral, arrière, tonneaux...).

Ce dispositif de retenue est intégré au siège 1. Un avantage de cette intégration est que la position du siège dans l'habitacle (plus ou moins avancé et plus ou moins haut) est sans impact sur son fonctionnement.

Comme le montre la figure 1, le dispositif de retenue comporte au moins un système dit d'airbag. De façon très préférentielle, il en comporte deux.

Chaque système d'airbag comporte au moins un coussin gonflable de sécurité, ci-après plus simplement appelé coussin 40, 41. On considérera que chaque système d'airbag comporte ici un unique coussin 40, 41.

Ces deux coussins 40, 41 sont situés de part et d'autre du conducteur 20. Au repos (i.e. à l'état non gonflé), ils sont en effet repliés dans les flancs du dossier. Lors de leur gonflage, ils sont prévus pour se déployer de part et d'autre de l'occupant 90 du siège 1.

Ici, ils présentent des formes différentes, l'un des coussins (côté portière) étant prévu pour se déployer sur le côté et à l'avant de la tête de l'occupant lorsque l'autre des coussins se déploie essentiellement sur un côté de l'occupant et devant l'une de ses épaules.

Bien entendu, en variante, les coussins pourraient présenter des formes différentes de celles illustrées sur la figure 1.

Chaque système d'airbag comporte en outre au moins une bride 50, 51 associée au coussin 40, 41.

Une « bride » est ici définie comme un élément allongé, souple mais non extensible selon sa longueur (ou très peu extensible, son allongement étant inférieure à 10% en cas de choc violent). Elle est de préférence réalisée par tissage ou torsion de fils en matière textile ou synthétique ou encore métallique.

La souplesse de la bride 50, 51 permet de la déformer depuis une configuration droite jusqu'à une configuration recourbée avec un rayon de courbure de 1 cm, sans l'endommager.

La fonction des brides 50, 51 est de garantir le déploiement des coussins 40, 41 dans la position requise et/ou de retenir l'occupant 90 plaqué contre son siège 1 lors d'un choc.

Les brides 50, 51 sont ici couplées aux coussins. Elles sont dites « couplées » aux coussins 40, 41 en ce sens qu'elles sont cousues aux coussins et/ou qu'elles passent au travers de passants 44 fixés aux coussins ou au travers d'ouvertures 45 prévus dans les coussins.

Une ouverture 45 telle que celle illustrée sur la figure 1 est ici définie comme une fenêtre au contour fermé pratiquée dans le coussin. Ici, la bride 50 passe au travers de cette ouverture 45.

Un passant 44 tel que celui illustré sur la figure 1 est pour sa part définie comme une pièce (par exemple de tissu) qui est attachée (par exemple cousue) sur l'un des coussins et qui délimite un passage pour une bride. Ici, la bride 50 passe au travers de ce passant 44.

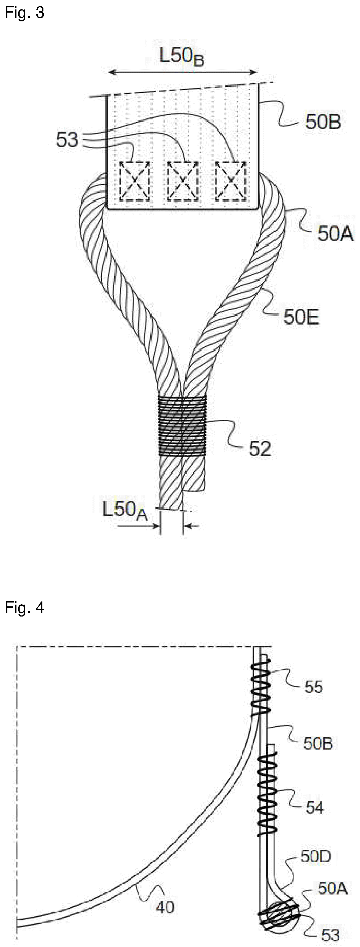

Comme le montre la figure 4, la bride 50 est en outre cousue sur le coussin 40 par une couture 55. En variante, on pourrait préférer ne pas l'y coudre pour que la bride reste libre de glisser sur le coussin.

Ici, les deux brides 50, 51 associées aux deux coussins 40, 41 présentent des formes similaires. Alors, une seule d'entre elles sera décrite.

Comme le montre la figure 3, cette bride 50 présente une largeur plus petite sur une première partie de sa longueur que sur une seconde partie de sa longueur.

De manière préférentielle, la bride 50 se rattache à l'assise 10 par la première partie de sa longueur et au dossier 20 par la seconde partie de sa longueur. Elle est donc moins encombrante du côté de l'assise, ce qui garantira, comme cela sera bien expliqué plus loin, un bon confort à l'occupant 90 du siège 1.

La bride présente ici une épaisseur plus grande sur la première partie de sa longueur que sur la seconde partie de sa longueur.

La bride 50 comporte en pratique, sur la première partie de sa longueur, une corde 50A qui se rattache à l'assise 10 et, sur la seconde partie de sa longueur, une sangle 50B qui se rattache au dossier 20. La sangle et la corde sont attachées l'une à l'autre.

Une sangle 50B est, comme le reste de la bride, un élément allongé, souple et non extensible. Elle se caractérise par la forme aplatie de sa section. Une sangle présente ainsi une largeur L50_{B} au moins trois fois supérieure à son épaisseur (figure 3).

Une corde 50A est, comme le reste de la bride, un élément allongé, souple et non extensible. Elle se caractérise par la forme épaisse de sa section. Une corde présente de préférence une section de forme circulaire (sa largeur L50_{A} et son épaisseur étant égaux à son diamètre). En variante, une corde peut présenter une section sensiblement carrée ou rectangulaire, mais dans ce cas, sa largeur est au maximum trois fois supérieure à son épaisseur. Elle est de préférence au maximum deux fois supérieure à son épaisseur.

Typiquement, la sangle 50B est ici obtenue par tissage ou tressage à plat de fibres textiles ou synthétiques. Il s'agit ici d'une sangle réalisée dans la même matière et selon le même processus de fabrication que les sangles de ceinture de sécurité.

De son côté, la corde 50A est ici fabriquée par torsion ou tressage de plusieurs torons de fibres ou de fils. Elle comporte de préférence une âme et une gaine. Il peut ainsi s'agir d'une corde de type Paracorde (avec âme et gaine). Ici, il s'agit d'une corde technique, réalisée dans une matière et selon un processus de fabrication identiques à ceux utilisés pour fabriquer les suspentes de parachute.

En variante, il pourrait s'agir d'une corde du type de celles qu'on utilise dans le domaine nautique, pour autant que sa charge maximum avant rupture soit supérieure ou égale à 2000 kg.

Comme le montrent les figures 3 et 4, la sangle 50B et la corde 50A sont attachées ensemble par l'une de leurs extrémités.

La sangle 50B présente plus précisément une extrémité basse qui se rattache à l'extrémité haute de la corde 50A.

Pour cela, l'extrémité basse 50B de la sangle 50 est repliée sur elle-même pour former une boucle 50D fermée et est retenue dans cette position par des moyens de fixation. Ces moyens de fixation pourraient être formés par de la colle et/ou des agrafes. Ici, il s'agit de préférence d'une couture 54 qui traverse les deux épaisseurs de sangle. Cette couture 54 s'étend de préférence sur toute la largeur de la sangle 50B. Cette couture peut également s'étendre en hauteur, par exemple sur plusieurs lignes parallèles réparties sur une partie réduite de la longueur de la sangle.

La corde 50A traverse alors la boucle 50D formée par la sangle 50B afin de s'y attacher.

Pour cela, l'extrémité haute de la corde 50A est repliée sur elle-même pour former une boucle 50E et est retenue dans cette position par des moyens de fixation. Ces moyens de fixation pourraient être formés par une bague métallique ou des agrafes ou encore une épissure. Ici, il s'agit de préférence d'une surliure 52 qui entoure les deux brins de corde.

La sangle 50B et la corde 50A pourrait être simplement attachées par ces deux boucles entrelacées. Alors, elles seraient, dans une certaine mesure délimitée par les boucles 50D, 50E, libres l'une par rapport à l'autre.

Mais de préférence, elles sont fixées ensemble de façon à ne pas pouvoir glisser l'une par rapport à l'autre. Pour cela, elles pourraient être collées ensemble ou fixées de diverses manières. Ici, cette fixation est opérée par au moins une couture 53 qui passe au travers de la sangle 50 et de la corde 54. Il est ici prévu plusieurs coutures 53 qui s'étendent sur des zones distinctes. Comme le montra la figure 3, il est ainsi prévu trois zones de couture régulièrement réparties sur la largeur de la sangle 50B.

On pourrait prévoir qu'une unique sangle soit associée à chaque coussin. Toutefois, ici, comme le montre la figure 1, chaque coussin 40, 41 est associé à deux sangles 50B, 50C, 51B, 51C.

En pratique, la première sangle 50B, 51B décrite précédemment est prévue pour, lorsque ce coussin se gonfle, passer du côté extérieur du coussin par rapport à l'occupant 90, puis pour traverser une ouverture 45 pratiquée dans ce coussin afin de se rattacher par son extrémité supérieure à l'ossature du dossier 20. Sa fonction première est de positionner et retenir le coussin dans une position adéquate lors du choc.

En revanche, la seconde sangle 50C, 51C est prévue pour passer entre le coussin et l'occupant 90 puis pour se rattacher par son extrémité supérieure à l'ossature du dossier 20, afin de s'appliquer contre l'épaule de l'occupant dans le but de le retenir contre le dossier 20.

Les secondes sangles 50C, 51C sont bien distinctes des premières sangles 50B, 51B. La première sangle et la seconde sangle de chaque couple se rejoignent en revanche en partie basse pour se rattacher à la même corde 50A, 51A.

Ici, ces deux sangles sont fixées ensemble, au niveau de la couture 54. En variante, elles pourraient toutes deux former des boucles au travers desquelles la corde passerait. Encore en variante, la seconde sangle pourrait se rattacher à la première à distance de la couture 54.

Pour garantir que les positions des brides 50, 51 soient idéales en vue de leur déploiement et pour faciliter ce déploiement, le siège 1 comporte deux fourreaux allongés 60, 61 respectivement fixés sur les bords droit et gauche de l'assise 10.

Les deux fourreaux allongés 60, 61 présentent des positions symétriques par rapport à un plan de symétrie du siège 1. Ainsi, seul l'un d'entre eux sera décrit.

Ce fourreau allongé 60 est prévu pour loger au moins une partie de la corde 50A, 51A de la bride qui lui est associée. Ici, il loge l'ensemble de cette corde. Il loge ici uniquement cette corde mais en variante, il pourrait loger également une partie des sangles.

Ce fourreau allongé 60 se présente essentiellement sous la forme d'un tube souple et profilé. On entend par là qu'il délimite un conduit dans lequel une partie au moins de cette bride peut se loger.

Ici, chaque fourreau 60 présente une section transversale en forme de C dont les deux bords viennent au contact l'un de l'autre. Ainsi, en cas de choc, notamment lorsque les coussins 40, 41 se gonflent, les brides peuvent sortir des fourreaux allongés 60, 61 par les fentes prévues entre leurs deux bords.

Chaque fourreau allongé 60 est ici fixé non seulement à l'assise 10 du siège 1, mais aussi au dossier 20.

En pratique, ce fourreau allongé 60 est fixé sur le bord supérieur de l'un des flancs 12 de l'ossature 11 de l'assise 10. Il se prolonge à l'avant sur la traverse anti-sous-marinage 14, dans un renfoncement 15 prévu en creux dans la face supérieure 16 de cette traverse.

Grâce à ce renfoncement et à l'encombrement réduit du fourreau allongé 60 et de la corde qu'il loge, la présence de la bride sur la face supérieure de la traverse anti-sous-marinage 14 reste imperceptible pour l'occupant 90 du siège 1.

De façon préférentielle également, le fourreau allongé 60 se prolonge à l'arrière sur l'un des flancs de l'ossature du dossier 20. Ici, il ne se prolonge pas sur toute la hauteur de ce flan. En effet, il n'est pas nécessaire de protéger ces brides en partie haute du dossier, notamment car il n'y est pas prévu d'élément qui serait situé dans la zone haute de déploiement des brides et auxquels ces brides pourraient malencontreusement s'accrocher. Ce n'est bien entendu pas le cas dans la zone basse de déploiement des brides, où l'on trouve notamment les commandes manuelles et/ou électriques des mobilités du siège 1.

Le fourreau allongé 60 est alors fixé à l'ossature 11 de l'assise 10 et à celle du dossier 20. On pourrait envisager différents modes de fixation. Ainsi, le fourreau pourrait être vissé ou riveté sur ces ossatures.

On pourrait prévoir que le gonflement de chaque coussin suffise à extraire les brides de l'assise. Mais ici, ce n'est pas le cas.

Ainsi, l'extrémité basse de chaque bride (i.e. de chaque corde 50A, 51A) pourrait être fixée directement à la traverse anti-sous-marinage 14. Elle y est ici indirectement fixée, via un prétensionneur (non visible sur les figures).

On rappelle qu'un prétensionneur, également appelé prétendeur, est un dispositif de sécurité automobile qui permet, en cas d'accident, d'exercer un effort de traction sur un câble ou une tige. Un tel prétensionneur est bien connu lorsqu'il est employé à une extrémité d'une sangle de ceinture de sécurité.

Techniquement, un prétensionneur se présente généralement sous la forme d'un vérin, avec un piston mobile qui est adapté à coulisser dans un fourreau entre une position d'attente et une position activée.

Un tel prétensionneur est équipé :
- d'un système d'actionnement adapté à exercer un effort de traction sur le piston pour le forcer à se déplacer depuis sa position d'attente jusqu'à sa position activée (il peut par exemple s'agir d'un ressort précontraint, d'une cartouche de gaz sous pression, ou encore d'un dispositif pyrotechnique), et
- d'un système de déclenchement du système d'actionnement en cas d'accident (qui comprend par exemple un accéléromètre).

Alors, l'extrémité basse de chaque corde 50A, 51A est fixée au piston de l'un des prétensionneurs, lequel piston permet, en cas d'accident, de sortir les brides 50, 51 de leurs fourreaux 60, 61.

Au repos, en l'absence de choc et donc de déclenchement du gonflement des coussins 40, 41 et des prétensionneurs, les coussins 40, 41 et les brides restent en revanche respectivement repliés dans les deux rebords latéraux du dossier 20 du siège 1 (au sein des fourreaux 60, 61 pour les cordes 50A, 51A).

Lors de l'assemblage du siège 1, on pourrait prévoir que les brides soient livrées déjà logés dans les fourreaux. Ce n'est toutefois pas ici le cas.

En pratique, les fourreaux 60, 61 sont tout d'abord fixés aux ossatures de dossier et d'assise du siège 1, par les moyens de fixations précités (vis, rivets...).

Les brides 50, 51 et les prétensionneurs sont ensuite rapportés sur ces ossatures. Pour cela, les deux prétensionneurs sont fixés tête-bêche sous la traverse anti-sous-marine 14. Ensuite, les brides sont raccordées aux prétensionneurs et sont engagées dans les fourreaux 60, 61 en les faisant coulisser le long de ces derniers. Les brides peuvent ensuite être fixées en partie haute de l'ossature 21 du dossier 20, de part et d'autre de l'appui-tête 30.

Enfin, les garnitures et housses du siège sont rapportés sur les ossatures d'assise et de dossier.

En cas d'accident, les fourreaux 60, 61 sont alors conçus pour réduire la friction subie par les brides lors de leur extraction. Ils permettent en outre de guider les brides pour qu'elles passent sur le côté des flasques en plastique rapportés sur les côtés du siège.

A ce sujet, on notera qu'on préfèrera que les mobilités du siège 1 soient motorisés. En effet, les boutons d'actionnement de ces moteurs sont plus petits que des leviers ou molettes permettant d'incliner le dossier ou d'ajuster la hauteur du siège. Ils sont alors moins susceptibles de gêner le déploiement des brides en cas d'accident.

La présente invention n'est nullement limitée aux modes de réalisation décrits et représentés, mais l'homme du métier saura y apporter toute variante conforme à l'invention. Typiquement, l'ensemble de la bride pourrait se présenter sous la forme d'une sangle dont la largeur se réduirait vers le bas.

Selon une variante du mode de réalisation illustré, la corde et la sangle pourraient ne pas faire de boucle et être fixées ensemble par exemple par une surliure qui entourerait la sangle alors que cette dernière serait recourbée autour de la corde.

Encore en variante, par exemple si le prétensionneur était logé en partie haute du dossier, on pourrait utiliser en partie haute de la bride une corde qui relierait alors la sangle au prétensionneur.

## Revendications

1. Siège (1) de véhicule automobile, comportant :
- un dossier (20),
- une assise (10), et
- un dispositif de retenue d'un occupant (90) du siège (1) qui comprend, d'une part, au moins un coussin gonflable de sécurité (40, 41) qui, lorsqu'il est gonflé, est adapté à se déployer sur le côté au moins de l'occupant (90), et, d'autre part, au moins une bride (50, 51) qui s'étend en longueur entre deux extrémités rattachées respectivement au dossier (20) et à l'assise (10),
**caractérisé en ce que** la bride (50, 51) présente une largeur plus petite sur une première partie de sa longueur que sur une seconde partie de sa longueur.

2. Siège (1) selon la revendication 1, dans lequel la bride (50, 51) comporte, sur la première partie de sa longueur, une corde (50A, 51A), et, sur la seconde partie de sa longueur, une sangle (50B, 51B) reliée à la corde (50A, 51A).

3. Siège (1) selon la revendication 2, dans lequel la sangle (50B, 51B) présente une extrémité repliée sur elle-même pour former une boucle (50D) au travers de laquelle passe la corde (50A, 51A), et il est prévu des moyens de fixation (54) de l'extrémité de la sangle (50B, 51B) en position repliée sur elle-même.

4. Siège (1) selon la revendication 3, dans lequel les moyens de fixation (54) comportent une couture.

5. Siège (1) selon l'une des revendications 3 et 4, dans lequel il est prévu des moyens de blocage (57) de la corde (50A, 51A) dans la boucle (50D), qui comportent de préférence une couture qui passe au travers de la sangle (50B, 51B) et de la corde (50A, 51A).

6. Siège (1) selon l'une des revendications 2 à 5, dans lequel la corde (50A, 51A) présente une extrémité repliée sur elle-même pour former une boucle (50E) au travers de laquelle passe la sangle (50B, 51B), et il est prévu des moyens de fixation (52) de l'extrémité de la corde (50A, 51A) en position repliée sur elle-même.

7. Siège (1) selon la revendication 6, dans lequel les moyens de fixation (52) comportent une surliure.

8. Siège (1) selon l'une des revendications 2 à 7, dans lequel il est prévu au moins une autre sangle (50C, 51C) qui est rattachée à ladite corde (50A, 51A) ou à la sangle (50B, 51B) par une extrémité et au dossier (20) par une autre extrémité.

9. Siège (1) selon l'une des revendications 1 à 8, dans lequel la bride (50, 51) se rattache à l'assise (10) du côté de la première partie de sa longueur, et au dossier (20) du côté de la seconde partie de sa longueur.

10. Siège (1) selon l'une des revendications 1 à 9, dans lequel il est prévu un fourreau allongé (60, 61) qui fixé à l'assise (10) et qui loge uniquement la première partie de la longueur de la bride (50, 51).

11. Véhicule automobile comportant un plancher, **caractérisé en ce qu'**il comporte un siège (1) conforme à l'une des revendications 1 à 10, monté sur le plancher.
